Europäisches Patentamt
European Patent Office
Office européen des brevets

(19)

(11) Publication number: **0 173 388**
**A1**

# EUROPEAN PATENT APPLICATION

(12)

(21) Application number: **85201292.1**

(22) Date of filing: **09.08.85**

(51) Int. Cl.⁴: **H 02 K 37/18**, H 02 K 21/20

(30) Priority: **20.08.84 NL 8402543**

(43) Date of publication of application: **05.03.86 Bulletin 86/10**

(84) Designated Contracting States: **BE DE FR GB IT**

(71) Applicant: **N.V. Philips' Gloeilampenfabrieken, Groenewoudseweg 1, NL-5621 BA Eindhoven (NL)**

(72) Inventor: **Christiaens, Alois Eduard, INT. OCTROOIBUREAU B.V. Prof. Holstlaan 6, NL-5656 AA Eindhoven (NL)**

(74) Representative: **Schepens, Antonius Cornelis Maria et al, INTERNATIONAAL OCTROOIBUREAU B.V. Prof. Holstlaan 6, NL-5656 AA Eindhoven (NL)**

## (54) Synchronous motor.

(57) A hybrid synchronous motor is described, which motor comprises a stator with two sections which are each provided with an annular coil (13, 14) which cooperates with sets of teeth (2, 3, 5, 6, 7, 8, 11, 12) to be magnetized oppositely by said coils. The teeth are arranged in sectors on each section in such a way that the sectors of teeth of one set of teeth lie between those of the other set of teeth. The rotor comprises two rotor sections (20, 21) each having one circularly arranged set of teeth which cooperates with two sets of teeth of the associated stator section. The two rotor sections are axially spaced by an axially magnetized permanent magnet (22).

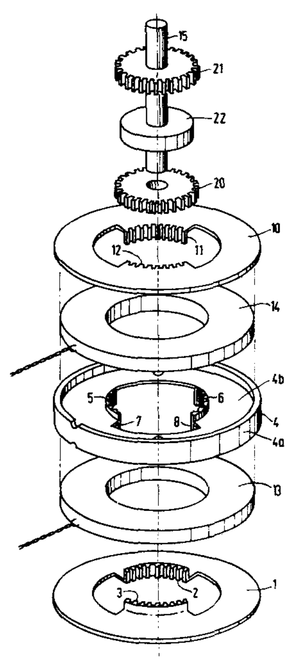


EP 0 173 388 A1

0173388

Synchronous motor.

The invention relates to a synchronous motor comprising a stator and a rotor, which rotor comprises a first and a second coaxial rotor section which are each provided with rotor teeth at their outer circumference, which teeth are arranged along a circle and are axially spaced by an interposed axially magnetized permanent magnet, the stator comprising a first and a second coaxial stator section which are interconnected in a magnetically conductive fashion and which are each provided with at least one coaxial annular coil which is enclosed by a magnetically conductive circuit which comprises a said rotor section and the stator section which surrounds the relevant annular coil, each stator section terminating in a first and a second set of coaxially arranged stator teeth which cooperate with the rotor teeth via air gaps, when one of said sets of stator teeth is aligned with the cooperating rotor teeth the other sets of stator teeth being offset from the cooperating rotor teeth by substantially 1/4, 1/2 and 3/4 tooth pitch in such a way that a difference in offset of 1/2 tooth pitch is obtained between the stator sections. This type of motor isknown as a "hybrid motor" and may be constructed as a stepping motor. Such a motor is disclosed inter alia in US-PS 4,206,374. The stator sections of this motor comprise discs which are disposed on each side of each of the annular coils and which comprise teeth which project radially inwards and which are arranged along a circle, which teeth each cooperate individually with a rotor disc which comprises teeth which project radially outwards and which are arranged along a circle in order to obtain a stepping angle of $1.8^{o}$, which is smaller than that of motors with offset interdigitated claw teeth.

The known motor has an axial dimension which is too large for some uses. The invention aims at modifying the known motor in such a way that the axial dimension can be reduced substantially. To this end the invention is characterized in that for each rotor section there is provided only one set of circularly arranged teeth and for each set of stator teeth the teeth are arranged in at least two sectors, which sectors for each stator section are so positioned relativeto each other that the sectors of teeth of one set and the sectors of teeth of the other set of said stator section alternate, the teeth being so arranged that for each stator section the teeth of both sets cooperate with the same set of teeth of the associated rotor section.

The steps in accordance with the invention elable the axial dimension of each stator section to be reduced, because no allowance has to be made for a sufficiently large axial spacing of the stator teeth, which requirement in the present case is translated into a sufficiently large circumferential spacing between the sets of teeth since only one set of teeth for each rotor section has been provided and there is enough space for the rotor magnet because of this,allowing the magnetically conducting part between the two stator sections in the known motor to be dispensed with.

A constructionally very simple embodiment of the invention may be characterized further in that the stator comprises four substantially identical parts of a magnetically conductive material, which parts are substantially disc-shaped and have an opening for receiving the rotor, a toothed portion which projects substantially perpendicularly from said disc-shaped part and which is arranged sectorwise around said opening, and a substantially cylindrical portion which is situated around the outer circumference, which projects in the same direction as the toothed portion, and which has an axial dimension which is equal to half the axial dimension of the stator sections, which disc-shaped parts are arranged in pairs to form two spaces for accommodating the annular coils, said parts being shifted relative to each other around their axis in such a way that for each stator section the sectors of the toothed portion of one part lie between the sectors of the toothed portion of the other part and the said offsets between the sets of teeth are 1/4, 1/2 and 3/4 tooth pitch.

Further, it is advantageous if the two rotor sections in a motor in accordance with the invention are axially laminated.

In the motor in accordance with said US Patent Specification, which motor comprises two toothed discs per rotor section, the flux produced upon energization of a said coil extends in the axial direction from one toothed disc to the other toothed disc of the same rotor section, which gives rise to eddy currents which cannot be reduced by axial lamination. In a motor in accordance with the invention it can be arranged, for example, that said flux extends in the circumferential direction through the toothed disc over $90^{o}$. This enables the eddy currents to be reduced by axial lamination of toothed rotor discs.

The invention will now be described in more detail, by way of example, with reference to the drawings, in which:

Fig. 1 is an axial sectional view of a first embodiment of the invention,

Fig. 2 is an exploded view of the motor shown in Fig. 1,

Fig. 3 is a plan view of the part 4 of the motor shown in Figs. 1 and 2,

Fig. 4 is a sectional view taken on the line IV-IV in Fig. 3,

Fig. 5 is a plan view of the part 1 (10) of the motor shown in Figs. 1 and 2,

Fig. 6 is a sectional view taken on the line VI-VI in Fig. 5

Fig. 7 shows schematically the arrangement of the stator teeth on the parts shown in Figs. 4 and 6,

Fig. 8 shows schematically the arrangement of the stator and rotor teeth relative to each other,

Fig. 9 shows the energizing currents for the motor of Figs. 1 to 8 as a function of time,

Fig. 10 is a plan view of a part 23 for a second embodiment of the invention,

Fig. 11 is a sectional view taken on the line XI-XI in Fig. 10,

Fig. 12 is an axial section view of this second embodiment,

Fig. 13 is a sectional view of one stator section of a second embodiment of the invention, and

Fig. 14 and 15 are sectional views of possible laminated rotor construction for use in the motors according to the invention.

Fig. 1 is an axial sectional view of a motor embodying the invention and Fig. 2 is an exploded view of the motor (without rotor bearing means). The motor comprises a stator and a rotor. The stator comprises a substantially disc-shaped part 1 with an opening for the rotor, around which opening two facing sets of teeth 2 and 3 are situated on a cylindrical surface, which sets of teeth each cover less than 1/4 of the circumference. This part is engageable with a central part 4 which comprises a circumferential cylindrical portion 4a and, halfway up its height, a disc-shaped inner portion 4b in which an opening for the rotor is formed, around which opening four sets of teeth 5, 6, 7 and 8 are situated on a cylindrical surface, the sets 5 and 6 projecting axially on one side of portion 4b and the sets 7 and 8 on the other side in such a way that said sets 7 and 8 are situated between the sets 2 and 3 of the part 1. Each of the sets 5 to 8 covers less than a quarter of the circumference. An upper part 10 fits on the centre part 4, which upper part is in principle identical to the part 1 but turned upside down. This upper part 10 comprises sets of teeth 11 and 12 which are situated between the sets 5 and 6 of the centre part. Annular coils 13 and 14 are accommodated in the annular spaces formed between the parts 1 and 4 and the parts 4 and 10, respectively.

The rotor comprises a shaft 15 which is supported in bearings 16 and 17 which are mounted in the stator sections 1 and 10 respectively via parts 18 and 19 respectively made of, for example, a plastics material, for example by injection-moulding. Said shaft 15 carries two discs 20 and 21 which each have teeth on the outer circumference, the pitch of these teeth being equal to that of the teeth of the sets of stator teeth. These discs are so arranged that the teeth of disc 20 cooperate with the sets of teeth 2, 3, 7 and 8 and the teeth of disc 21 cooperate with the sets of teeth 5, 6, 11 and 12. An axially magnetized permanent-magnet 22 is arranged between the two rotor discs.

Fig.3 is a plan view of the stator section 4, Fig. 4 a sectional view taken on the line IV-IV, Fig. 5 is a plan view of the stator section 1 or an underneath view of the stator section 10, Fig. 6 is a sectional view taken on the line VI-VI, and Fig. 7 shows schematically the arrangement of the teeth in the sets of teeth 2, 3, 5, 6, 7, 8, 11 and 12. Each of these sets covers less than $90^{o}$, so that the sets fit between one another. In the present example the sets each comprise 10 teeth with a tooth pitch of $7.2^{o}$. Between the sets of teeth the inner rim of the disc-shaped part of each stator section recedes in an outward direction to provide enough space for the sets of teeth of the adjacent part.

Fig. 8 illustrates the arrangement of the various teeth relative to each other by showing one half of a developed interior view of the stator and a part of a developed exterior view of the rotor. The tooth arrangement is such that an offset of half a tooth pitch p is obtained between the sets 2, 3 and 7,8 and between the sets 5, 6 and 11, 12 (apart from a rotation through an integral multiple of the tooth pitch p, in particulary $90^{o}$); the sets 5, 6 are situated inline with the sets 7, 8, and the sets 11, 12 are situated inline with the sets 3, 2. The teeth of each rotor disc have an offset of 1/4 tooth pitch relative to those of the other. Many variants to this tooth arrangement are possible, such as:

- the sets 7, 8 are offset relative to the sets 5, 6to the same extent (apart from offsets through an integral multiple of tooth pitches) as that between the sets 11, 12 and 3, 2. Examples of this are offsets through 1/2 tooth pitch, through 90$^{o}$ and through 90$^{o}$ $\pm$ 1/2 tooth pitch.

- The rotor teeth are situated in line and offsets of 1/4 tooth pitch are provided between the sets 5, 6 and 7, 8 and between the sets 3, 2 and 11, 12, as the case may be in combination with the first-mentioned variants.
- Different numbers of sets per circumference, for example a division into sectors of 45$^{o}$, i.e. four sets of teeth per circumference.

In principle, all variants are possible which provide a shift of 180$^{o}$ electrical between the sets of stator teeth associated with the same annular coil and a phase shift of 90$^{o}$ electrical between the sets of stator teeth associated with one annular coil and those associated with the other annular coil relative to the teeth of the associated rotor disc.

Fig. 9 shows schematically suitable energizing currents $I_1$ and $I_2$ for the annular coils 13 and 14 respectively, a current being said to be positive if the field in the air gaps between the teeth of sets 2, 3 and the teeth of the rotor disc 20 and the field in the air gaps between the teeth of the sets 11, 12 and the teeth of the rotor disc 21 amplify the field produced by the permanent magnet 22. If the current $I_1$ is possible ($I_2$ = 0) between the instants $t_1$ and $t_2$, the field generated by this current amplifies the permanent-magnet field in the air gaps between the teeth of the sets 2, 3 and of the rotor disc 20, so that the teeth of the rotor disc 20 will be oriented towards the teeth of the sets 2, 3. If subsequently the current $I_2$ becomes positive ($I_1$ = 0), the same will happen between the teeth of the rotor disc 21 and the sets of teeth 11, 12, so that the rotor is rotated through an angle equal to 1/4 tooth pitch. Now the current $I_1$ becomes negative which causes the teeth of the rotor disc 20 to be oriented towards the teeth of the sets 7, 8, which again results in a rotation through 1/4 tooth pitch. After this, the current $I_2$ becomes negative ($I_1$ = 0), so that the teeth of the rotor disc 21 are oriented towards the teeth of the sets 5, 6 upon which one full cycle with a rotation through one tooth pitch p is completed. This means that the stepping angle is 1/4 tooth pitch or $1.8^{\circ}$ in the present example.

If the motor is energized with the sinusoidal currents $I_1'$ and $I_2'$ which are represented by broken lines and which have a phase difference of $90^{\circ}$, the motor will behave as a synchronous motor.

In the embodiment shown in Figures 1 and 2 two different stator sections are required, namely the part 4 and the identical parts 1 and 10. However, if stator sections 23 as shown in Fig. 10(plan view) and Fig.11 (sectional view taken on the line XI-XI) are employed, the stator may be constructed with similar parts 23 (apart from the coils and bearings), as is shown in the sectional view in Fig. 12. In Fig. 12 the centre part 4 in Fig. 1 is constituted by two identical parts 23b and 23c as shown in Figs. 10 and 11 secured back to back. The identical parts 23a and 23d function as the upper and lower parts (1,10) by rotating them through the appropriate angle ($90^{\circ}$ - 1/2p) relative to the centre part.

A modification to the motor shown in Fig. 12 is obtained by making the projecting outer rim of the outer parts 23a and 23d higher and by using parts without projecting outer rims (such as the parts 1 and 10 in Figs. 1 and 2) for the inner parts.

Fig. 13 is a sectional view of one stator section of a modification in which the teeth are not arranged on a flanged portion but extend substantially radially inwards. The axial height of the stator teeth is then reduced. In order to ensure that the effective axial height of the teeth of the sets of stator teeth, i.e. the overlapping portions of the stator sections and the cooperating rotor sections remains the same, which in the motors shown in Figs 1 and 10 is achieved by giving the stator teeth an axial height larger than the axial height of the rotor teeth, the rotor teeth in this variant are made larger, for example by the use of cup-shaped toothed rotor discs as shown in Fig. 24 or 15. In the motor shown in Fig. 14 the rotor discs 20 and 21 are cup-shaped with the "cups" 24,25 facing outwards, which is made possible by the use of a short magnet 22 of, for example, samarium-cobalt. Parts of the rotor-bearing means can then be accommodated in the "cups" 24, 25, which results in a reduced axial length. Other magnet materials such as ticonal require a larger axial length, which becomes possible when the rotor shown in Fig. 15 is used, where the "cups" 24, 25 in the rotor discs 20 and 21 accommodate the magnet 22.

In view of the small axial height of the motor it is advantageous for some uses to arrange a plurality of motors in accordance with the invention, for example two, on one shaft, axially aligned, for example in order to increase the torque or to reduce the stepping angle, the latter case requiring an offset through 1/8 tooth pitch between the two motors.

In the known motor in accorance with the aforementioned United States Patent Specification, which motor comprises two toothed discs per rotor section, the flux produced by energization of the coil extends in the axial direction from one toothed disc to the other, which gives rise to eddy currents which cannot be reduced by axial lamination. In the motors described herein, however, the flux extends in the circumferential direction through the toothed disc over $90^{\circ}$. Thus the eddy currents can be reduced by axial lamination of the toothed rotor discs.

Such lamination facilitates the use of a cup-shaped structure for the toothed rotor discs. See for example thelamination of the toothed discs 20 and 21 in Figs. 14 and 15.

CLAIMS

1. A synchronous motor comprising a stator and a rotor, which rotor comprises a first and a second coaxial rotor section which are each provided with rotor teeth at their outer circumference, which teeth are arranged along a circle and are axially spaced by an interposed axially magnetized permanent magnet, the stator comprising a first and a second coaxial stator section which are interconnected in a magnetically conductive fashionand which are each provided with at least one coaxial annular coil which is enclosed by a magnetically conductive circuit which comprises a said rotor section and the stator section which surrounds the relevant annular coil, each stator section terminating in a first and a second set of coaxially arranged stator teeth which cooperate with the rotor teeth via air gaps, when one of said sets of stator teeth is aligned with the cooperating rotor teeth the other sets of stator teeth being offset from the cooperating rotor teeth by substantially 1/4, 1/2 and 3/4 tooth pitch in such a way that a difference in offset of 1/2 tooth pitch is obtained between the stator sections, characterized in that for each rotor section there is provided only one set of circularly arranged teeth and for each set of stator teeth the teeth are arranged in at least two sectors, which sectors for each stator section are so positioned relative to each other that the sectors of teeth of one set and the sectors of teeth of the other set of said stator section alternate,the teeth being so arranged that for each stator section the teeth of both sets cooperate with the same set of teeth of the associated rotor section.

2. A synchronous motor as claimed in Claim 1, characterized in that the stator comprises four substantially identical parts of a magnetically conductive material, which parts are substantially disc-shaped and have an opening for receiving the rotor, a toothed portion which projects substantially perpendicularly from said disc-shaped part and which is arranged sectorwise around said opening, and a substantially cylindrical portion which is situated around the outer circumference, which projects in the same direction as the toothed portion, and which has an axial dimension which is equal to half the axial dimension of the stator sections, which disc-shaped parts are arranged in pairs to form two spaces for accommodating the annular coils, said parts being shifted relative to each other around their axis in such a way that for each stator section the sectors of the toothed portion of one part lie between the sectors of the toothed portion of the other part and the said offsets between the sets of teeth are 1/4, 1/2 and 3/4 tooth pitch.

3. A synchronous motor as claimed in Claim 1 or 2, characterized in that the two rotor sections are axially laminated.

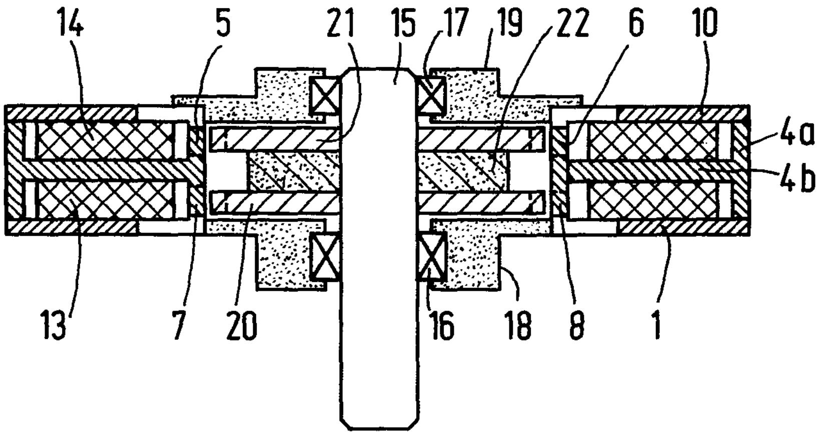


FIG.1

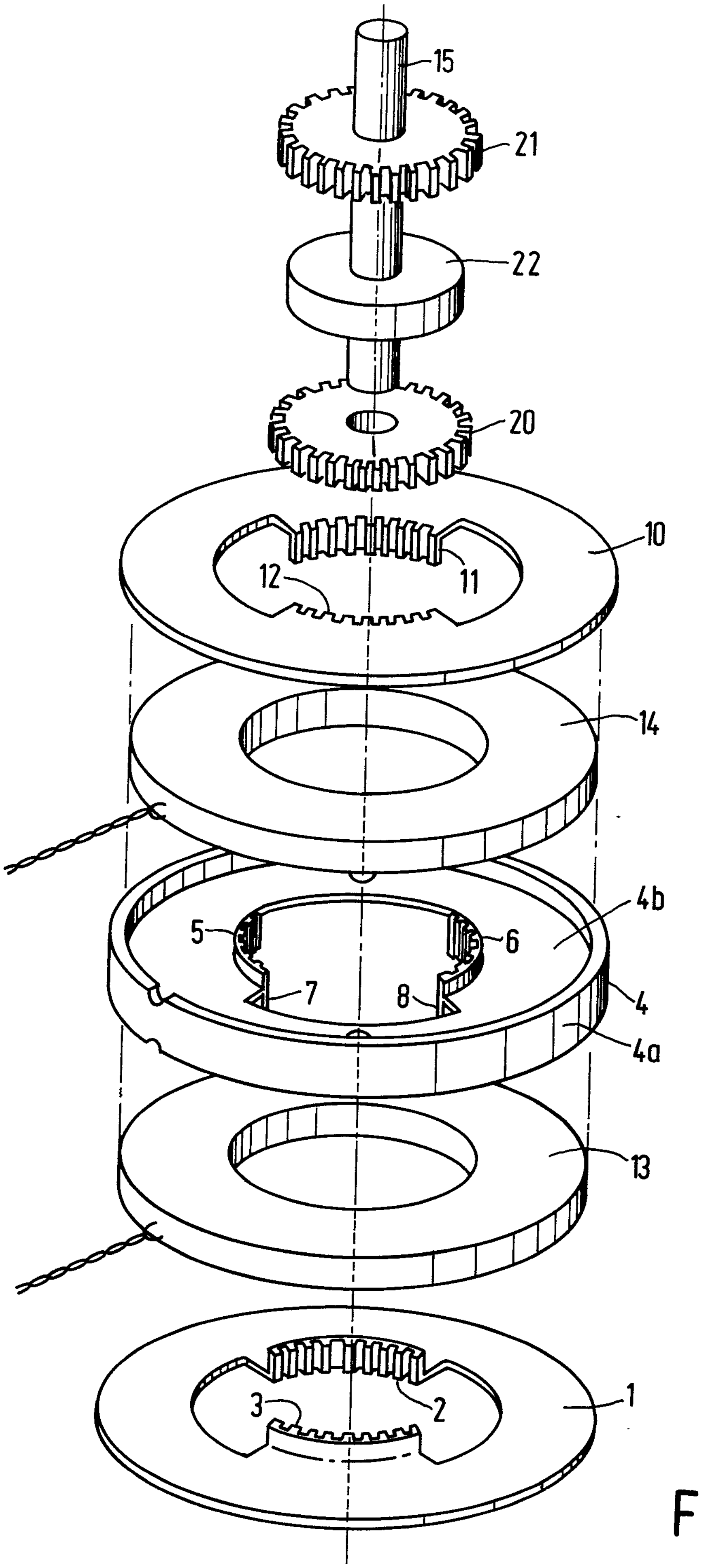


FIG.2

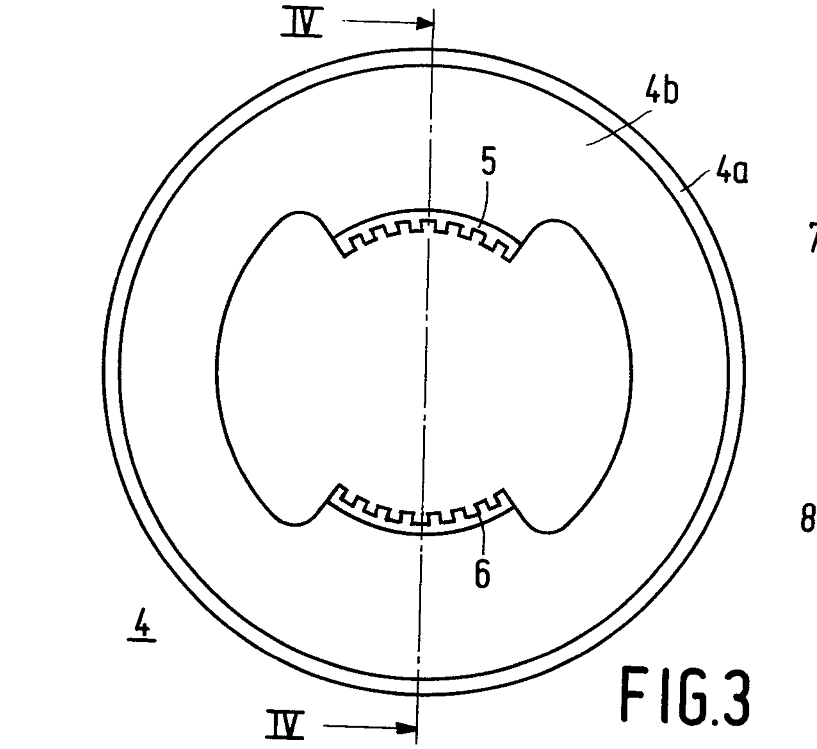


FIG.3

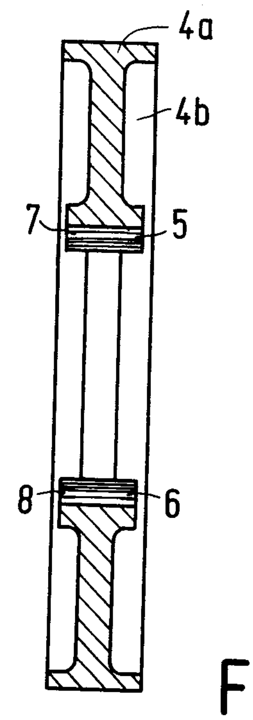


FIG.4

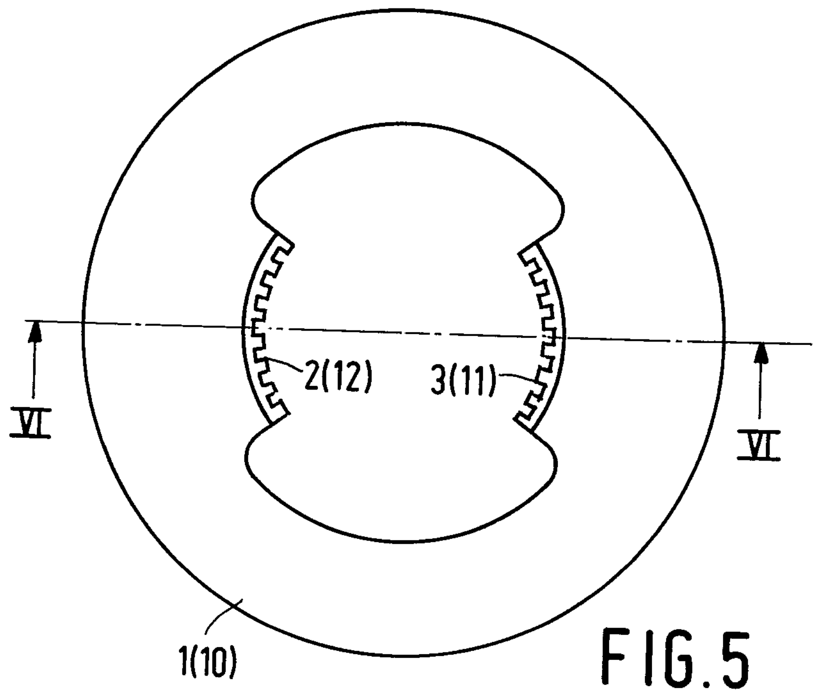


FIG.5

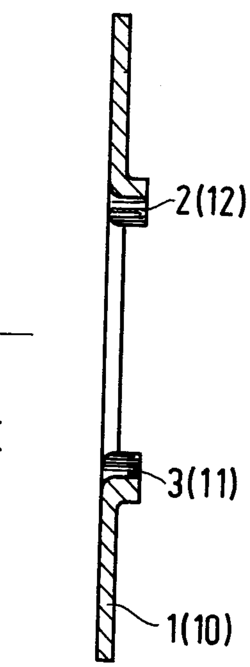


FIG.6

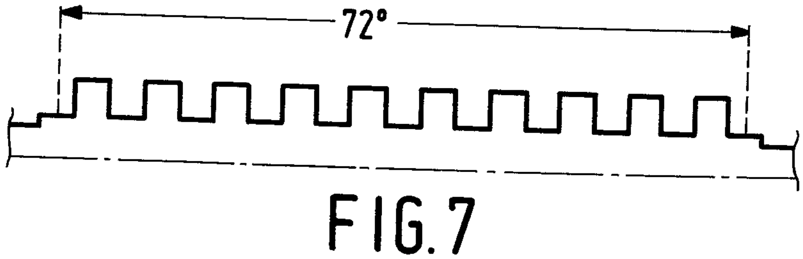


FIG.7

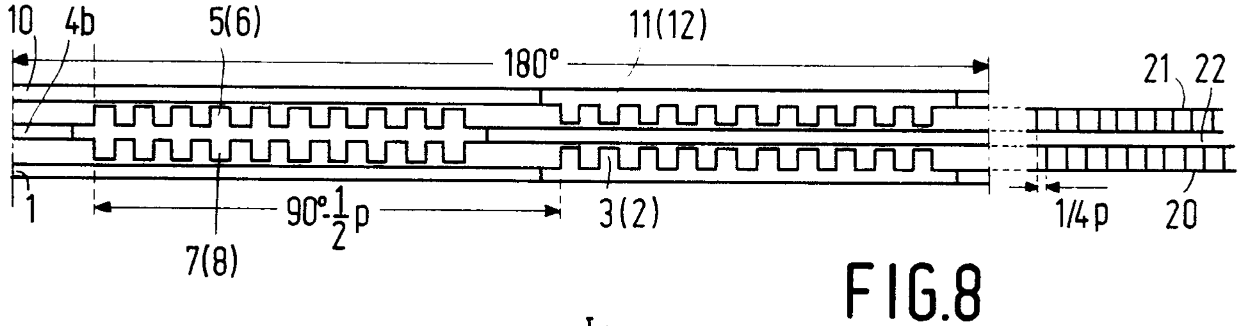


FIG.8

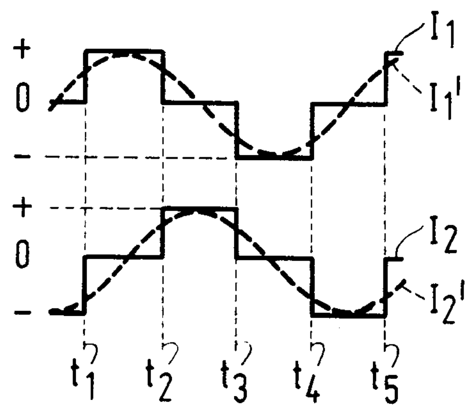


FIG.9

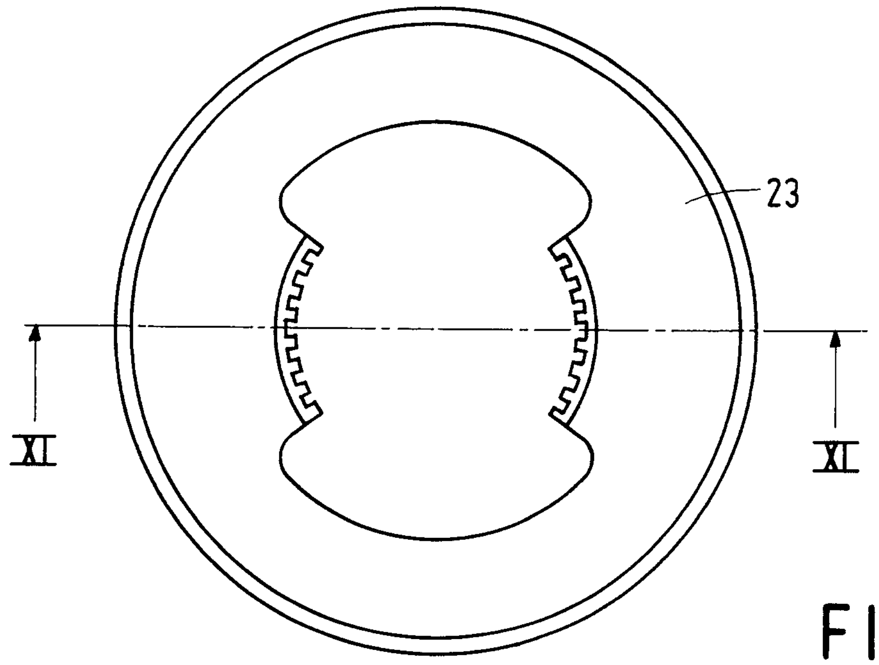


FIG.10

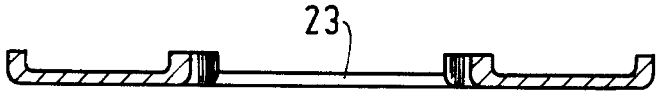


FIG.11

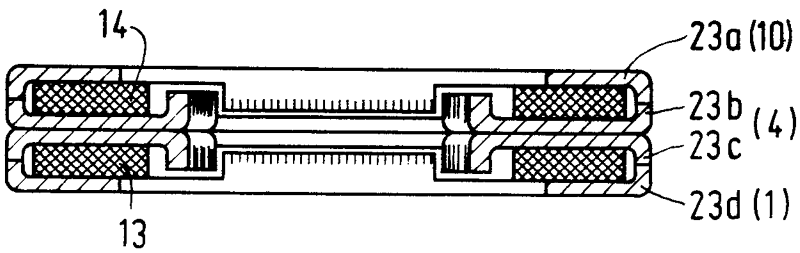


FIG.12

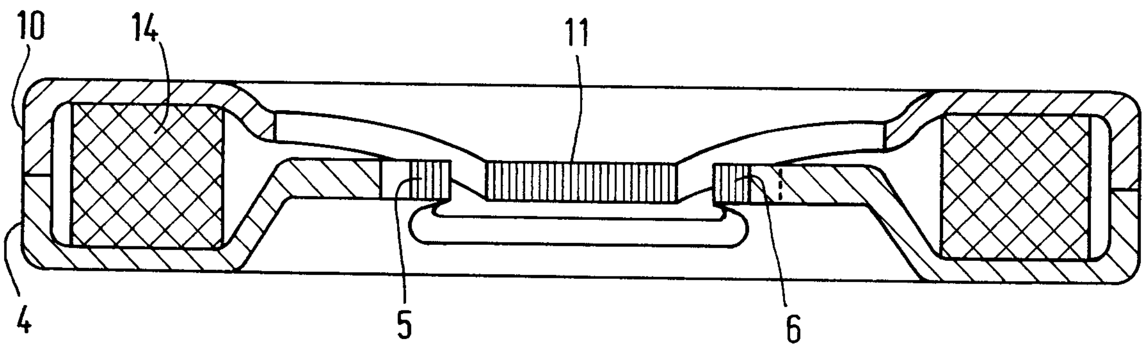


FIG.13

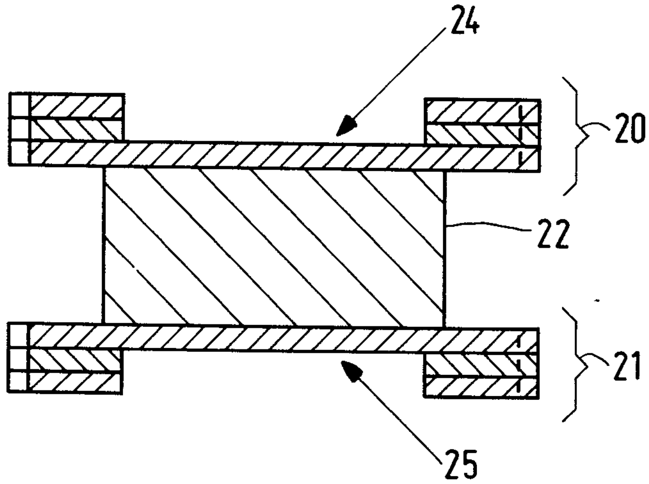


FIG.14

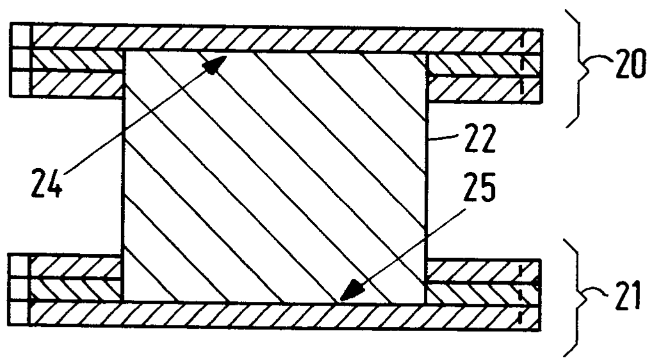


FIG.15

European Patent Office

# EUROPEAN SEARCH REPORT

0173388

Application number

EP 85 20 1292

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | PATENTS ABSTRACTS OF JAPAN, vol. 6, no. 173 (E-129)[1051], 07 September 1982; & JP - A - 57 88 863 (NIHON SAABO K.K.) 02-06-1982 * Abstract; figures 5-13 * --- | 1 | H 02 K 37/18<br>H 02 K 21/20 |
| A | GB-A- 518 298 (BRITISH THOMSON-HOUSTON) * Page 1, line 44 - page 2, line 46; figures 1-4 * --- | 1,2 | |
| A | US-A-3 549 918 (CROYMANS et al.) * Column 2, lines 29-39; figures 1,2 * --- | 2 | |
| A | US-A-3 506 859 (SNOWDON) * Column 3, lines 4-8; figures 1,2 * ----- | 3 | TECHNICAL FIELDS SEARCHED (Int. Cl.4)<br>H 02 K |

The present search report has been drawn up for all claims

| Place of search | Date of completion of the search | Examiner |
|---|---|---|
| THE HAGUE | 14-11-1985 | TIO K.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82